# EUROPEAN PATENT APPLICATION

(11) **EP 2 896 902 A1**
(43) Date of publication of application: **22.07.2015**
(21) Application number: 12884622.7
(22) Date of filing: 14.09.2012
(51) Int. Cl.: F24F 11/02

(54) **AIR CONDITIONING SYSTEM**

(71) Applicant: Mitsubishi Electric Corporation, Tokyo 100-8310 (JP)
(72) Inventor: YABUTA, Atsuhiro, Tokyo 100-8310 (JP); TAKATA, Shigeo, Tokyo 100-8310 (JP)
(74) Representative: Pfenning, Meinig & Partner GbR
(86) International application number: PCT/JP2012/073581
(87) International publication number: WO 2014/041678

(57) **Abstract**

An air-conditioning system includes: an air-conditioning apparatus including one or a plurality of indoor units 200 and one or a plurality of outdoor units 100 connected by a refrigerant pipe; and a general controller 300 connected to the outdoor units 100 and the indoor units 200 via a transmission line 500 and connecting input/output general devices 310 related to air-conditioning. The general controller 300 includes: setting means 301 which performs a process for setting, for each output signal, a condition related to an input signal and a determination value defined within a predetermined range for the condition; setting storage means 302 which stores data related to the setting of the setting means 301; and determination means 303 which performs a process of performing determination as to control on the basis of the data stored in the setting storage means 302 and the condition included in each input signal and a determination value corresponding to the condition, and sending an output signal based on the determination.

## Description

### Technical Field

The present invention relates to an air-conditioning system.

### Background Art

For example, in an air-conditioning apparatus (air-conditioning system) in which a plurality of indoor units and one or a plurality of outdoor units are connected by pipes and which performs air-conditioning of architecture such as a building, an operation related to air-conditioning is often performed with informational cooperation through communication (transmission/reception) between the outdoor units, the indoor units, and the like. In addition, such an air-conditioning apparatus is also able to perform communication between a device external to the apparatus and an element (e.g., see Patent Literature 1).

### Citation List

### Patent Literature

Patent Literature 1: Japanese Unexamined Patent Application Publication No. 2009-079817 (Fig. 1)

### Summary of Invention

### Technical Problem

In the air-conditioning system as described above, the number, contents, and the like of functions which can be realized are often different, for example, depending on a type or the like. In order to realize different functions, methods of communication between devices of the air-conditioning apparatus are often different.

Here, there is a case where it is desired to, for example, cooperate with another device related to air-conditioning having a different communication method. In such a case, setting of coordination with the other device related to the air-conditioning is performed via the air-conditioning apparatus, and it is difficult to perform fine setting.

In order to solve the problems as described above, it is an object of the present invention to provide an air-conditioning system which allows setting regarding control of another device related to air-conditioning to easily be performed.

### Solution to Problem

An air-conditioning system according to the present invention is an air-conditioning system including: an air-conditioning apparatus including one or a plurality of indoor units and one or a plurality of outdoor units connected by a refrigerant pipe; and a controller connected to the outdoor units and the indoor units via a transmission line and connecting an input device and an output device related to air-conditioning. The controller includes: setting means for setting a condition related to an input signal from each input device and a determination value when the condition is met, for each output signal outputted to the output device; setting storage means for storing data related to the setting of the setting means; and determination means for performing a process of determining whether a content of the input signal from the input device meets the condition, on the basis of the data stored in the setting storage means, performing determination as to control on the basis of the determination value that meets the condition, and transmitting an output signal based on the determination to the corresponding output device.

### Advantageous Effects of Invention

According to the air-conditioning system of the present invention, for example, in the case where another device related to air-conditioning is controlled in conjunction with the air-conditioning apparatus, it is possible to easily perform setting, since the condition for the signal to be inputted is represented as a determination value in the setting means. Brief Description of Drawings

[Fig. 1] Fig. 1 is a diagram showing an air-conditioning system according to Embodiment of the present invention.
[Fig. 2] Fig. 2 is a diagram showing an exemplary configuration of an outdoor unit 100.
[Fig. 3] Fig. 3 is a diagram showing an exemplary configuration of an indoor unit 200.
[Fig. 4] Fig. 4 is a diagram showing the configuration of a general controller 300 according to Embodiment.
[Fig. 5] Fig. 5 is a diagram for explaining a setting process in setting means 301 according to Embodiment.
[Fig. 6] Fig. 6 is a diagram showing a process procedure in determination means 303 according to Embodiment.

### Description of Embodiments

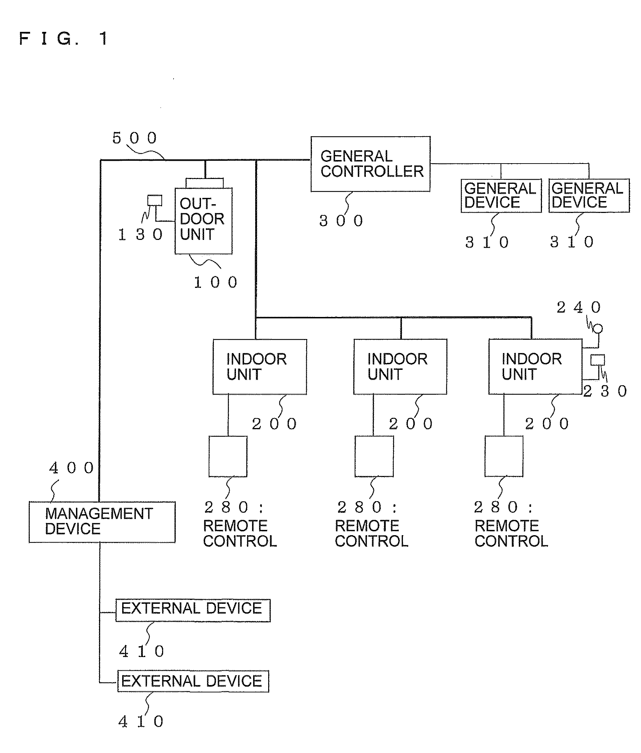

Fig. 1 is a diagram showing an air-conditioning system according to Embodiment of the present invention. Here, in particular, communication of the air-conditioning system and a configuration regarding a control system will mainly be described. Here, the system is an example, and the present invention is not limited to the system. As shown in Fig. 1, an outdoor unit 100 and indoor units 200 which compose an air-conditioning apparatus, a general controller (facility control device) 300, and a management device (centralized controller) 400 are connected by a transmission line 500 dedicated for the air-conditioning system (hereinafter, referred to as a transmission line 500) and are able to communicate signals including various data. For example, a signal or the like of an operation instruction based on an operation content is transmitted from the management device 400 to an operation target device. Here, each device connected by the transmission line 500 has, for example, a specific number, an address, or the like in communication (hereinafter, referred to as address) and is discriminated from each other. In addition, when each device performs communication, the device transmits a signal including data of a destination of the signal and the address of the source.

The air-conditioning system is configured with one or a plurality of outdoor units (heat source side devices) 100 (one in Fig. 1) and one or a plurality of indoor units (load side devices) 200 (three in Fig. 1) provided at architecture such as a building. The outdoor unit 100 and each indoor unit 200 are connected by a refrigerant pipe, and the pressure of a refrigerant flowing through the pipe is changed to remove and reject heat of the refrigerant, thereby performing air-conditioning.

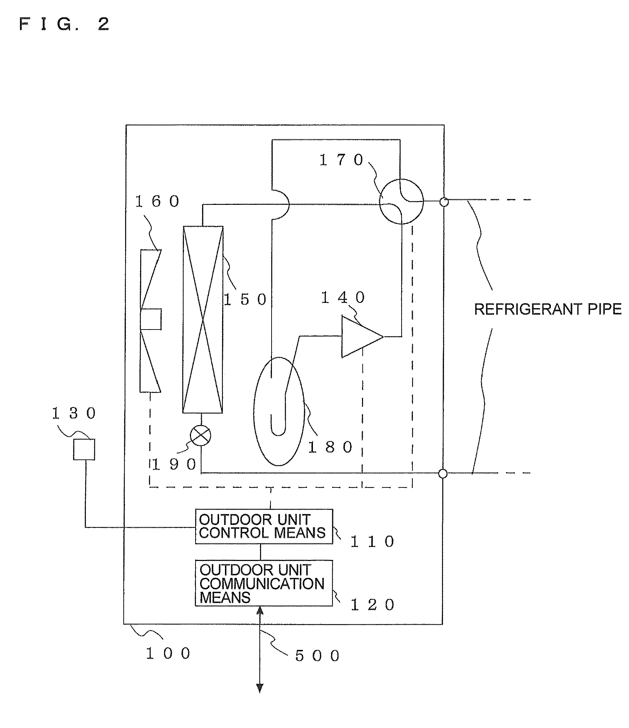

Fig. 2 is a diagram showing an exemplary configuration of the outdoor unit 100. Outdoor unit control means 110 controls an operation of each means composing the outdoor unit 100, for example, on the basis of a signal or the like received by outdoor unit communication means 120 from the management device 400 or the like. Here, the outdoor unit control means 110 includes storage means (not shown) which stores data required for performing a process. The outdoor unit communication means 120 is connected to the transmission line 500, and serves as an interface for signal communication between the transmission line 500 and the outdoor unit control means 110. An outdoor unit temperature sensor 130 is detection means which detects a temperature (air temperature) around the outdoor unit 100. Here, the outdoor unit temperature sensor 130 is described as part of the configuration of the outdoor unit 100 but may be provided, for example, as a separate unit.

A compressor 140 compresses the sucked refrigerant (gas) to apply an arbitrary pressure based on an operation frequency thereof to the refrigerant, and sends out (discharges) the refrigerant. Although not particularly limited, the compressor 140 may be a variable-displacement inverter compressor which includes an inverter circuit and is able to change a capacity (an amount of the refrigerant sent out per unit time), for example, by arbitrarily changing the operation frequency. An outdoor unit side heat exchanger 150 exchanges heat between air and the refrigerant flowing through the heat exchanger. An outdoor unit side fan 160 is used for, for example, sending air to the outdoor unit side heat exchanger 150 for heat exchange. A four-way valve 170 is a valve for, for example, switching a pipe path according to a cooling operation or a heating operation. An accumulator (liquid separator) 180 is a device for storing a liquid and causing the compressor 140 to suck only a gaseous refrigerant. In addition, an outdoor unit side expansion valve 190 adjusts a valve opening degree thereof on the basis of an instruction from the outdoor unit control means 110, to control a flow rate of the refrigerant.

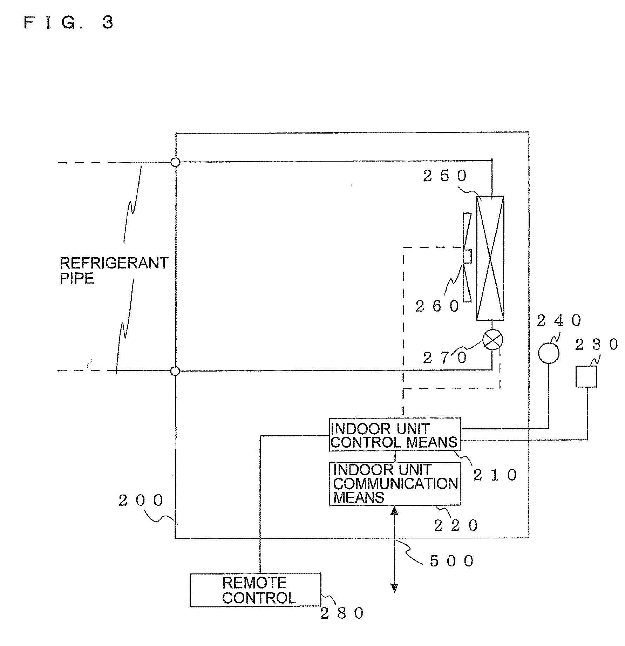

Fig. 3 is a diagram showing an exemplary configuration of the indoor unit 200. Indoor unit control means 210 controls an operation of each means composing the indoor unit 200, for example, on the basis of a signal including an operation instruction from a remote controller 280 (hereinafter, referred to as a remote control 280), a signal received by indoor unit communication means 220, or the like. Here, the indoor unit control means 210 includes storage means (not shown) which stores data required for performing a process. The indoor unit communication means 220 is connected to the transmission line 500, and serves as an interface for signal communication between the transmission line 500 and the indoor unit control means 210.

An indoor unit temperature sensor 230 is, for example, detection means which detects the temperature (air temperature) in a room in which the indoor unit 200 is provided. In addition, an indoor unit humidity sensor 240 is detection means which detects the humidity in the room. Signals regarding detection of the indoor unit temperature sensor 230 and the indoor unit humidity sensor 240 are transmitted to the indoor unit control means 210. Here, the indoor unit temperature sensor 230 and the indoor unit humidity sensor 240 are described as part of the configuration of the indoor unit 200, but may be provided, for example, as separate units. On the basis of the signals, the indoor unit control means 210 performs a process such as generation of data regarding temperature and humidity and transmission of a signal, including data of temperature and humidity, to the outdoor unit 100 and the management device 400.

An indoor unit side heat exchanger 250 exchanges heat between air and the refrigerant passing through the heat exchanger. An indoor unit side fan 260 sends air to the indoor unit side heat exchanger 250 to cause the indoor unit side heat exchanger 250 to exchange heat, and further sends heat-exchanged air to the room. An indoor unit side expansion valve 270 adjusts a valve opening degree thereof on the basis of an instruction from the indoor unit control means 210, to control a flow rate of the refrigerant. By so doing, the amount of the refrigerant passing through the indoor unit side heat exchanger 250 is controlled, and evaporation of the refrigerant at the indoor unit side heat exchanger 250, or the like is adjusted. The remote control 280 transmits, to the indoor unit control means 210, a signal which is an operation instruction such as a set temperature, an operation mode, or the like inputted by an operator via the remote controller or the like.

The general controller 300 is connected, for example, between the transmission line 500 and one or a plurality of general devices (general facility devices) 310 which cannot be connected directly to the transmission line 500. For example, in the case where the format of a signal or data communicated in the air-conditioning system is different from the format in the general device 310, the format of a signal such as an operation instruction for causing the general device 310 to perform control is converted, and then the signal is transmitted to the general device 310. In addition, the format of a signal or the like from the general device 310 is converted, and then the signal or the like is transmitted to the transmission line 500. Then, the general device 310 is operated and monitored, for example, to cause the general device 310 to operate in conjunction with the air-conditioning system.

Here, each general device 310 is a device (actuator) such as a ventilator or a humidifier for performing air-conditioning in conjunction with the air-conditioning system, various sensors (detection means) which detect a physical amount such as temperature, or the like. In addition, other than devices related to air-conditioning, each general device 310 may be another facility device, system, or the like which operates in conjunction with the air-conditioning system, such as a lighting device (system) or an anti-disaster device (system).

The management device 400 is a device which is connected to the transmission line 500 and intensively manages target devices in the air-conditioning system, such as the outdoor unit 100 and the indoor units 200. In addition, for example, the management device 400 connects to a LAN (Local Area Network) and serves as an interface for an external device 410.

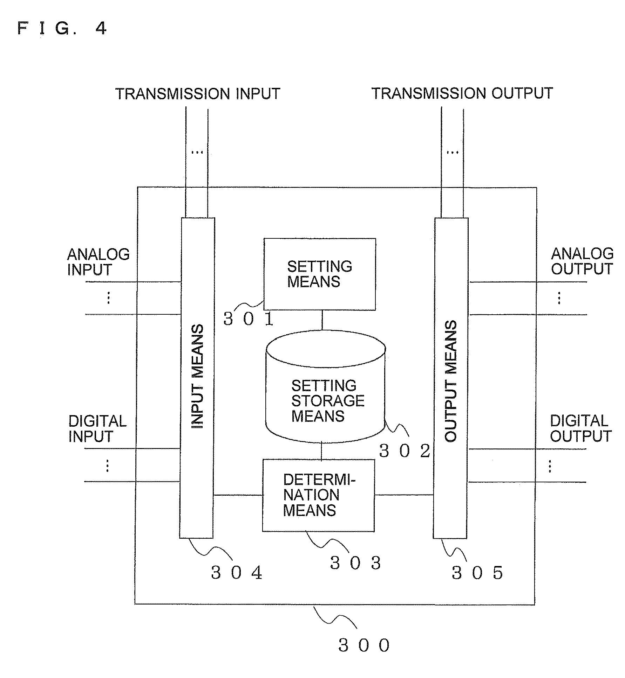

Fig. 4 is a diagram showing the configuration of the general controller 300 according to Embodiment. Setting means 301 assists in setting performed by a setter and generates setting data on the basis of the setting performed. Here, a description will be given on the assumption that the setter performs setting in the general controller 300. In another processing device such as a computer, setting data may be generated on the basis of data of an input made regarding the setting. Generation of setting data will be described later.

Setting storage means 302 stores setting data. The determination means 303 performs determination as to an output content related to control, on the basis of data inputted from input means 304 and setting data. The determination process will be described later. The input means 304 has an input port for signal and converts a signal inputted via the port, to a format which can be processed by the determination means 303. Here, the input means 304 has input ports adapted to three types of signals, that is, analog signal, digital signal, and transmission signal, depending on a device to be connected, or the like. Output means 305 has an output port for signal, and performs processing such as conversion of a signal including an instruction or the like to a device which is to be controlled, on the basis of a result of the determination of the determination means 303 and then transmits the signal. Here, the output means 305 has output ports adapted to three types of signals, that is, analog signal, digital signal, and transmission signal, depending on a device to be connected, or the like.

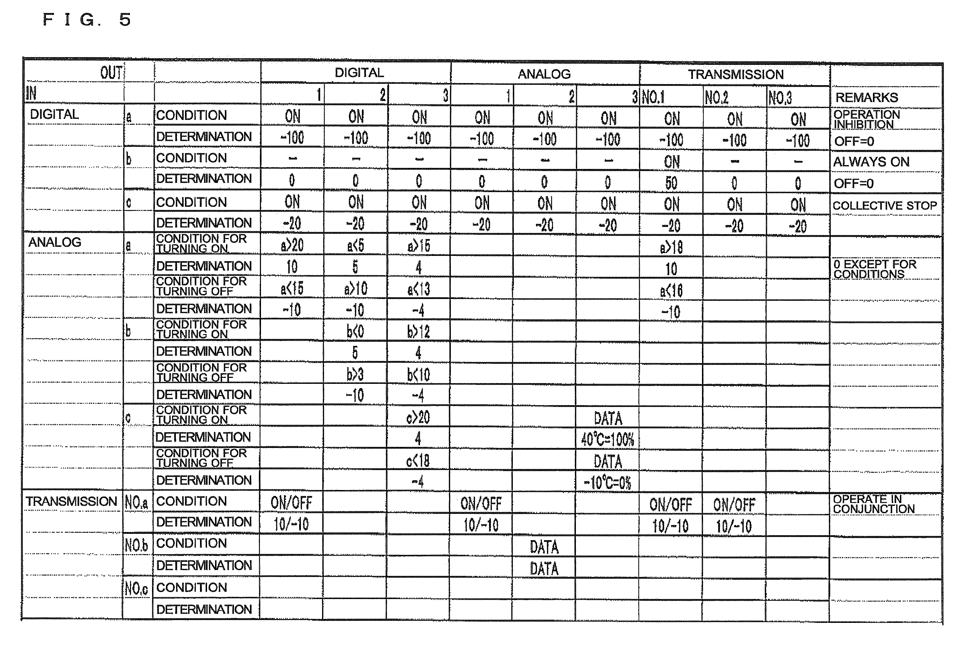

Fig. 5 is a diagram for explaining a setting data generation process in the setting means 301 according to Embodiment. In Fig. 5, a relationship between a signal inputted to each input port and a signal outputted from each output port is shown in a matrix form. Here, a matrix of three input ports (a, b, c) and three output ports (1, 2, 3) is formed for each of digital, analog, and transmission.

For example, in general, expertism is needed to perform setting related to control of a certain device on the basis of a plurality of input signals. In the air-conditioning system according to Embodiment, in order to achieve assistance so as to allow the setter to easily perform setting, setting is allowed to be performed with a condition of such as a numerical number indicated by a signal and a determination value corresponding to the condition. Here, a determination value which can be set is within a predetermined range, but the predetermined numerical range is not particularly limited. However, if the range is narrow, it becomes impossible to ensure flexibility in importance or the like of a signal. In addition, it is necessary to ensure a storage capacity for values to be handled, and thus a storage capacity is wastefully spent even if the range is too broad.

The determination means 303 calculates a total determination value by summing determination values each corresponding to the signals. If the total determination value is equal to or higher than an upper limit of the predetermined range (e.g., -10 to +10 in Fig. 5), ON is set. If the total determination value is within the predetermined range, the current state is maintained. If the total determination value is equal to or lower than a lower limit of the predetermined range, OFF is set.

Here, a description will be given on the basis of the example shown in Fig. 5. For example, on the basis of a signal inputted to a digital "a" port, -100 is set as a determination value of a condition for turning ON a device connected to each output port. For example, in order to inhibit an operation when a signal is inputted to the digital "a" port, a determination value which allows the total determination value to be always lower than the predetermined range (-10 to +10) even when any signal from another port is inputted, is set so that the device is always turned OFF.

In addition, for example, on the basis of a signal inputted to a digital "b" port, 50 is set as a determination value of a condition for turning ON a device connected to a transmission 1 port. For example, a signal is inputted to the digital "b" port on the assumption of a state where an operation is performed at all times, as in a server room or continuous ventilation. When a device connected to the transmission 1 port is caused to operate at all times, for example, a determination value is set which allows the total determination value to be higher than the predetermined range (-10 to +10) by continuously inputting a signal to the digital "b" port if no signal is inputted to the digital "a" port.

For example, on the basis of a signal inputted to a digital c port, -20 is set as a determination value of a condition for turning ON a device connected to each output port. For example, when a device which operates at all times is not stopped and other devices are stopped as in collective stop at a normal time, a determination value is set which allows the total determination value regarding the devices to be stopped to be lower than the predetermined range (-10 to +10).

With regard to setting regarding the analog input ports, it is possible to set an ON condition and an OFF condition and to set a determination value for each analog input port (a determination value except for the conditions is 0). In addition, by inputting a signal to the transmission input port, control is enabled to be performed in conjunction with another device. In each section (blank) in which a condition and a determination value are not set, the determination value is 0.

In addition, for example, with regard to a signal outputted from the analog output port, in the case of an ON signal, a device is caused to operate at an output of 100%, and in the case of an OFF signal, the output is 0%.

By representing, as a determination value, a condition for a signal to be inputted to the input port as described above, it is possible to easily perform setting. In particular, by adjusting and setting a determination value, it is also possible to adjust the magnitude of a degree of operation or stop. Moreover, by previously adjusting the total value of determination values regarding a plurality of input ports and setting the determination values, it is possible to set an AND condition for a signal (e.g., if 5 is set as a determination value regarding two input ports, when signals are inputted thereto, 10 is obtained).

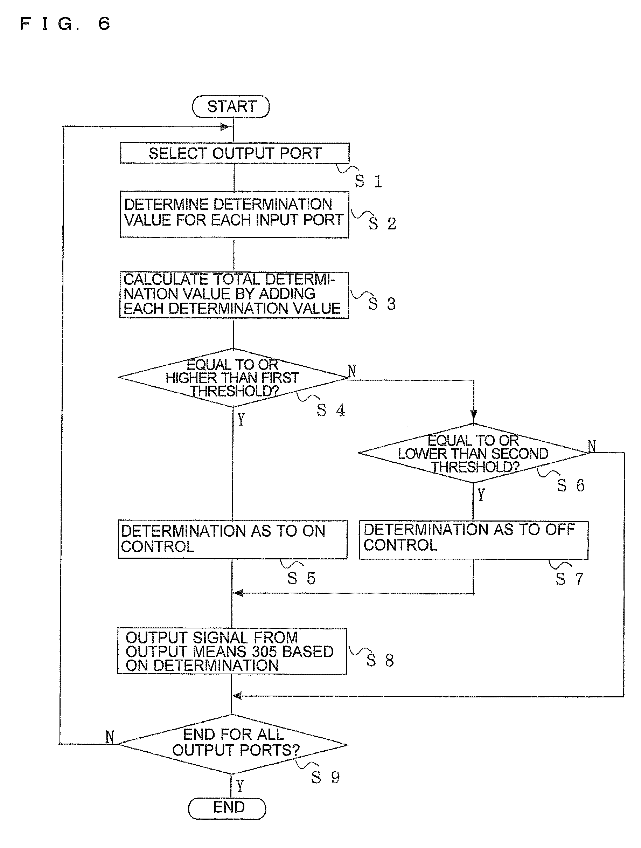

Fig. 6 is a diagram showing a process procedure in the determination means 303 of the general controller 300 according to Embodiment. The determination means 303 performs this process every predetermined time. The determination means 303 selects an output port (a device related to control) on which the determination process is to be performed (S1). The determination means 303 determines a determination value for each input port on the basis of presence/absence or the like of a signal at each input port of the input means 304 (S2). The determination means 303 calculates a total determination value by summing each determined determination value (S3).

Then, the determination means 303 determines whether the total determination value is equal to or higher than a first threshold which indicates the upper limit of the predetermined range (S4). If the determination means 303 determines that the total determination value is equal to or higher than the first threshold, the determination means 303 performs determination as to ON control (S5). Then, the determination means 303 causes the output means 305 to send a signal based on the determination (a signal related to ON control) from the corresponding output port (S8).

On the other hand, if the determination means 303 determines that the total determination value is not equal to or higher than the first threshold, the determination means 303 determines whether the total determination value is equal to or lower than a second threshold which indicates the lower limit of the predetermined range (S6). If the determination means 303 determines that the total determination value is equal to or lower than the second threshold, the determination means 303 performs determination as to OFF control (S7). Then, the determination means 303 causes the output means 305 to send a signal based on the determination (a signal related to OFF control) from the corresponding output port (S8). In addition, if the determination means 303 determines in S6 that the total determination value is not equal to or lower than the second threshold, the determination means 303 determines that the current state is to be maintained, and does not cause the output means 305 to send a signal from the output port.

Then, the determination means 303 determines whether the process has been performed on all the output ports (S9). If the determination means 303 determines that the process has yet to be performed, the determination means 303 selects another output port and performs the processes in S1 to S8. If the determination means 303 determines that the process has been performed, the determination means 303 ends the process.

As described above, according to the air-conditioning system of Embodiment, for example, in the case where another device related to air-conditioning is controlled in conjunction with the air-conditioning apparatus, since the condition for a signal to be inputted to each input port is represented as a determination value in the setting means 301, it is possible to easily perform setting. In addition, strict setting is not required, and it is possible to perform setting in a fuzzy sense. When the determination means 303 performs the determination as to ON, OFF, and maintenance of the current state, the determination is performed on the basis of a total determination value obtained by summing determination values determined on the basis of a signal to each input port, and thus it is possible to easily perform the control determination on the basis of a plurality of input signals.

### Reference Signs List

100 outdoor unit 110 outdoor unit control means 120 outdoor unit communication means 130 outdoor unit temperature sensor 140 compressor 150 outdoor unit side heat exchanger 160 outdoor unit side fan 170 four-way valve 190 outdoor unit side expansion valve 200 indoor unit 210 indoor unit control means 220 indoor unit communication means 230 indoor unit temperature sensor 240 indoor unit humidity sensor 250 indoor unit side heat exchanger 260 indoor unit side fan 270 indoor unit side expansion valve 280 remote control 300 general controller 301 setting means 302 setting storage means 303 determination means 304 input means 305 output means 310 general device 400 management device 410 external device 500 transmission line

## Claims

1. An air-conditioning system comprising:
an air-conditioning apparatus including one or a plurality of indoor units and one or a plurality of outdoor units connected by a refrigerant pipe; and
a controller connected to the outdoor units and the indoor units via a transmission line and connecting an input device and an output device related to air-conditioning, wherein
the controller includes:
setting means for setting a condition related to an input signal from each input device and a determination value when the condition is met, for each output signal outputted to the output device;
setting storage means for storing data related to the setting of the setting means; and
determination means for performing a process of determining whether a content of the input signal from the input device meets the condition, on the basis of the data stored in the setting storage means, performing determination as to control on the basis of the determination value that meets the condition, and transmitting an output signal based on the determination to the corresponding output device.

2. The air-conditioning system of claim 1, wherein the determination means performs the determination as to control on the basis of a total value obtained by summing the determination value obtained for each input signal when the condition is met.

3. The air-conditioning system of claim 1 or 2, wherein the determination means performs determination as to any of ON control, OFF control, and maintenance of a current state.
